# EUROPÄISCHE PATENTSCHRIFT

(11) **EP 4 141 038 B1**
(45) Veröffentlichungstag und Bekanntmachung des Hinweises auf die Patenterteilung: **10.01.2024**
(21) Anmeldenummer: 21193584.6
(22) Anmeldetag: 27.08.2021
(51) Int. Cl.: C08G 18/30, B32B 21/13, C08G 18/64, C08G 18/76

(54) **BINDEMITTELZUSAMMENSETZUNG UND VERFAHREN ZUM HERSTELLEN EINES HOLZWERKSTOFFS SOWIE HOLZWERKSTOFF**
WOOD MATERIAL AND BINDER COMPOSITION AND METHOD FOR PRODUCING A WOOD MATERIAL
COMPOSITION DE LIANT ET PROCÉDÉ DE FABRICATION D'UNE MATIÈRE DÉRIVÉE DU BOIS, AINSI QUE MATIÈRE DÉRIVÉE DU BOIS

(43) Veröffentlichungstag der Anmeldung: 01.03.2023
(73) Patentinhaber: SWISS KRONO Tec AG, 6004 Luzern (CH)
(72) Erfinder: Kalwa, Norbert, 32805 Horn-Bad Meinberg (DE); Seidack, Georg, 16835 Herzberg (Mark) (DE)
(74) Vertreter: Kalkoff & Partner Patentanwälte mbB

(56) Entgegenhaltungen:
- CN-A- 108 929 636
- DE-A1- 2 336 381
- DE-A1-102017 108 078
- JP-A- 2017 122 148
- US-A1- 2006 264 519

## Beschreibung

Die Erfindung betrifft eine Bindemittelzusammensetzung zum Herstellen eines Holzwerkstoffs, insbesondere eines plattenförmigen Holzwerkstoffs, ein Verfahren zum Herstellen eines solchen Holzwerkstoffs sowie einen solchen Holzwerkstoff.

Bei der Herstellung von Holzwerkstoffen (HWS) kommen eine Vielzahl von Bindemittelzusammensetzungen, insbesondere Leime, zur Anwendung. Dabei werden je nach Anwendung unterschiedliche Bindemittelzusammensetzungen favorisiert bzw. sind besonders geeignet. Für Holzwerkstoffplatten, die später in der Möbelherstellung oder im Innenausbau verwendet werden sollen, haben sich Bindemittelzusammensetzungen auf Basis von Harnstoff/Formaldehyd als besonders geeignet erwiesen. Sie sind in großen Mengen verfügbar und damit hergestellte Platten erfüllen die an solche Platten normativ gestellten Anforderungen. Zudem werden diese Platten üblicherweise beschichtet und an den Schmalflächen mit Kanten versiegelt, sodass hier ein Einwirken von Feuchtigkeit nahezu sicher verhindert wird.

Für Anwendungen, bei denen mit erhöhten Luftfeuchten bzw. nachstoßender Feuchtigkeit aus angrenzenden Bauteilen zu rechnen ist, wie z.B. bei Bodenbelägen, werden meist Harnstoff-Formaldehyd-Leime, gegebenenfalls verstärkt mit Melamin, eingesetzt, wobei den erhöhten Anforderungen durch eine erhöhte Menge der Bindemittelzusammensetzungen Rechnung getragen wird.

Bei Holzwerkstoffplatten, die in Bereichen mit hohen Luftfeuchten oder in direktem Kontakt mit Wasser verwendet werden, haben sich mit Melaminharz verstärkte Harnstoff-Formaldehyd-Leime, Phenolharze oder polymeres Diphenylmethandiisocyanat (PMDI) als geeignet erwiesen. Bei diesen Platten kommen neben der hygrischen Belastung häufig auch noch statische Beanspruchungen hinzu. Dem wird in den für die Produkte geltenden Normen durch Prüfungen der Quellung und der Biegefestigkeit Rechnung getragen. Für die verschiedenen Anwendungen kommen dabei insbesondere Sperrhölzer, Spanplatten und OSB (Oriented Strand Boards) zur Anwendung. Diese Platten werden vorzugsweise im Baubereich für konstruktive Anwendungen, im Fahrzeugbereich und als Verlegeplatten eingesetzt.

Obwohl generell für die oben beschriebenen Holzwerkstoffe alle Bindemittel zur Anwendung kommen können, die durch Feuchtigkeit oder Wasser nicht hydrolisiert werden, hat sich für OSB insbesondere polymeres Diphenylmethandiisocyanat als besonders geeignet herausgestellt. Die Gründe dafür sind die gute Wasserbeständigkeit der Bindemittelzusammensetzung und die Formaldehydfreiheit. Dies ist besonders wichtig, da OSB normalerweise unbeschichtet und zusätzlich in erheblichen Quadratmeter-Mengen bezogen auf das Raumvolumen verwendet werden. Wenn Platten mit formaldehydhaltigen Leimen eingesetzt werden, kann diese Kombination trotz des eingehaltenen Grenzwertes bezüglich der Formaldehydemission zu Problemen führen.

Das polymere Diphenylmethandiisocyanat besitzt jedoch gegenüber den anderen Bindemitteln einen gravierenden Nachteil, da es sich kaum durch die Verwendung von Härtern in seiner Reaktivität steuern lässt. Dies ist besonders nachteilhaft bei dickeren Holzwerkstoffplatten. Während bei anderen Bindemittel- bzw. Leimsystemen durch einen Einsatz von unterschiedlichen Mengen wenigstens eines Härters in der Deck- und Mittelschicht deutliche Produktionssteigerungen erreicht werden können, ist dies bei polymerem Diphenylmethandiisocyanat nicht möglich.

Zudem wird zum Aushärten des polymeren Diphenylmethandiisocyanats eine Temperatur von etwa 100°C benötigt, sodass bei dicken Holzwerkstoffen erst in der Mitte des Holzwerkstoffs ein Aushärten eintritt, wenn diese Temperatur auch dort erreicht ist. Somit ist hier ein bedeutender Nachteil, dass keine effektive Steuerungsmöglichkeit bei unterschiedlichen Plattenstärken besteht sowie aufgrund eines langsamen Aushärtens im Inneren des Holzwerkstoffs eine lange Bearbeitungszeit bei hoher Temperatur notwendig ist.

Es ist zwar bekannt, dass polymeres Diphenylmethandiisocyanat bzw. Isocyanat generell mit Polyolen oder auch mit Aminen in ihrer Aushärtung beschleunigt werden kann, jedoch läuft die Reaktion dann bereits bei Raumtemperatur ab, was bei der Produktion von Holzwerkstoffen zu nicht mehr kontrollierbaren Systemen oder zumindest zu einem Voraushärten und damit zu einem erhöhten Leimeinsatz führt. Dies führt zu einer Steigerung der Produktionskosten und zugleich zu einer Verringerung der Produktqualität. Zudem ist diese Art der Aushärtung bei Anlagenstillständen sehr nachteilhaft, da dann die gesamte Menge an beleimten Strands von der Beleimung bis zur Presse verworfen werden muss.

Aus der DE 10 2007062 316 A1 ist bereits eine wasserfreie, Isocyanat-Gruppen aufweisende Zusammensetzung als Alternative für feuchtigkeitsaushärtende Systeme mit einer NCO-Komponente bekannt, wobei die offenbarte Zusammensetzung ohne eine gegenüber Isocyanat reaktive Komponente auszuhärten ist. Dabei weist die Zusammensetzung ein "NCO-Prepolymer" auf, welches durch die Reaktion eines Esterpolyols mit einem Isocyanat hergestellt wird. Zudem weist die Zusammensetzung mindestens ein quarternäres Ammoniumsalz als Katalysator sowie etwa eine gleiche Menge mindestens einer Verbindung, die Epoxidgruppen trägt, als Co-Katalysator auf.

In der WO 00/46306 A1 wird ein System zur Beschleunigung der Aushärtung von Harnstoff-Formaldehydleimen beschrieben. Dort wird Methylendi-(phenylisocyanat) (MDI) mit einem Katalysator in Mengen bis 1,9 Gew% dem Leim zugemischt, um eine Beschleunigung des Aushärtens zu erreichen. Bei den Katalysatoren handelt es sich um eine Vielzahl von Verbindungen auf Basis von Zinnsalzen und/oder Aminen. Diese Systeme werden unter dem Handelsnamen DABCO mit verschiedenen Nummernzusätzen angeboten.

Die CN 108 929 636 A offenbart einen hochwirksamen Holzverbundklebstoff für Lehrspielzeuge und betrifft somit das technische Gebiet der Holzklebstoffe. Der offenbarte Klebstoff soll dabei eine gute Haftfestigkeit, Wasserbeständigkeit und Haftfähigkeit sowie eine relativ geringe Fließfähigkeit haben. Dazu wird der Holzverbundklebstoff aus Komponenten mit 70-90 Teile Wasserglas, 5-15 Teile Dodecylbenzolsulfonsäure, 30-45 Teile Polyphenylpolymethylen-Polyisocyanat, 8-14 Teile Ethylendiamintetraessigsäure, 5-12 Teile Natriummetachlorid, 5-12 Teile Sojabohnenleim, 2-5 Teile Flammschutzmittel, 2-5 Teile Wasserabweiser,2-8 Teile Füllstoff und 20-40 Teile entionisiertes Wasser jeweils als Gewichtsteile zusammengesetzt.

Der Erfindung liegt die technische Aufgabe zu Grunde, eine Bindemittelzusammensetzung zum Herstellen eines Holzwerkstoffs, insbesondere eines plattenförmigen Holzwerkstoffs, ein Verfahren zum Herstellen eines solchen Holzwerkstoffs sowie einen solchen Holzwerkstoff bereitzustellen, bei denen die Geschwindigkeit des Aushärtens von Isocyanat-Bindemitteln gezielt gesteuert und insbesondere beschleunigt werden kann, wobei die Härtungstemperatur einerseits gesenkt und andererseits in einem vorbestimmten Temperaturintervall gehalten werden kann, sodass ein Beginn des Aushärtens steuerbar ist, wodurch ein sicherer, schneller und kostengünstiger Fertigungsprozess ohne eine Verringerung der Produktqualität ermöglicht wird.

Die erfindungsgemäße Bindemittelzusammensetzung zum Herstellen eines Holzwerkstoffs, insbesondere eines plattenförmigen Holzwerkstoffs, umfasst eine wenigstens ein Isocyanat-Bindemittel aufweisende, organische Phase, eine wässrige Phase sowie zudem einen Lösungsvermittler zum schnellen Durchmischen beider Phasen und/oder zum Beschleunigen des Aushärtens des Isocyanat-Bindemittels, wobei der Lösungsvermittler eine oder mehrere Substanzen aus der Gruppe N,N-Naphtalensulfonsäure, Dodecansulfonsäure oder Diethylbenzyl-Natriumsulfosuccinat oder das jeweilige Natrium-Salz ist und der Anteil des Lösungsvermittlers zwischen 0,05 % und 1,0 % bezogen auf die Masse des Isocyanat-Bindemittels beträgt.

Weiterhin betrifft die Erfindung ein Verfahren zum Herstellen eines Holzwerkstoffs, insbesondere eines plattenförmigen Holzwerkstoffs, mit wenigstens den Schritten eines Herstellens und/oder eines Bereitstellens eines Faser- und/oder Spanmaterials, nachfolgend einer Zugabe einer Bindemittelzusammensetzung, insbesondere einer erfindungsgemäßen Bindemittelzusammensetzung, zu dem Spanmaterial, wobei die Bindemittelzusammensetzung eine wenigstens ein Isocyanat-Bindemittel aufweisende, organische Phase und eine zweite, mit der organischen Phase nicht vollständig mischbare wässrige Phase sowie einen Lösungsvermittler zum schnellen Durchmischen und/oder zum Beschleunigen des Aushärtens des Isocyanat-Bindemittels aufweist, wobei der Lösungsvermittler eine oder mehrere Substanzen aus der Gruppe N,N-Naphtalensulfonsäure, Dodecansulfonsäure oder Diethylbenzyl-Natriumsulfosuccinat oder das jeweilige Natrium-Salz ist sowie der Anteil des Lösungsvermittlers zwischen 0,05 % und 1,0 % bezogen auf die Masse des Isocyanat-Bindemittels beträgt, und schließlich dem Formen des Holzwerkstoffs aus dem beleimten Spanmaterial, insbesondere einem Herstellen durch ein Verpressen des beleimten Spanmaterials zu einem plattenförmigen Holzwerkstoff.

Der erfindungsgemäße Holzwerkstoff, insbesondere hergestellt nach dem erfindungsgemäßen Verfahren, weist wenigstens ein Spanmaterial sowie wenigstens eine ausgehärtete Bindemittelzusammensetzung, insbesondere eine erfindungsgemäße Bindemittelzusammensetzung, in wenigstens einer Schicht des Holzwerkstoffs auf, wobei die Bindemittelzusammensetzung wenigstens ein gebundenes und/oder ausgehärtetes Isocyanat-Bindemittel und einen Lösungsvermittler zum schnellen Durchmischen und/oder zum Beschleunigen des Aushärtens des Isocyanat-Bindemittels enthält, wobei der Lösungsvermittler eine oder mehrere Substanzen aus der Gruppe N,N-Naphtalensulfonsäure, Dodecansulfonsäure oder Diethylbenzyl-Natriumsulfosuccinat oder das jeweilige Natrium-Salz ist und der Anteil des Lösungsvermittlers zwischen 0,05 % und 1,0 % bezogen auf die Masse des Isocyanat-Bindemittels beträgt.

Schließlich betrifft die Erfindung die Verwendung einer Bindemittelzusammensetzung gemäß dieser Erfindung mit einem Lösungsvermittler zum Herstellen eines Holzwerkstoffs, insbesondere eines plattenförmigen Holzwerkstoffs.

Dabei ermöglicht die Verwendung eines Lösungsvermittlers in einer Bindemittelzusammensetzung eines Holzwerkstoffs es in besonders vorteilhafter Weise, die Reaktivität und dabei sowohl die Geschwindigkeit des Aushärtens, als auch die Starttemperatur des Aushärtens eines Isocyanat-Bindemittels gezielt zu steuern. Dabei ist es mittels der Erfindung weiterhin in vorteilhafter Weise möglich, gezielt das Aushärten des Isocyanat-Bindemittels und insbesondere von PMDI zu beschleunigen bzw. die Reaktion bei niedrigerer Temperatur zu starten. Insbesondere kann die Starttemperatur so eingestellt werden, dass die Reaktion nicht bereits bei Temperaturen beginnt, die üblicherweise nach dem Trocknen des Spanmaterials beim Beleimen vorhanden sind, typischerweise etwa 40°C.

Die Erfinder haben erkannt, dass bei dem Aushärten des Isocyanat-Bindemittels und insbesondere von PMDI eine bevorzugte Reaktion die Bildung von Polyharnstoffen durch die Reaktion mit Wasser ist, wobei das Isocyanat-Bindemittel und insbesondere von PMDI auch mit anderen aziden Protonen aus der Holzmatrix (Cellulose, Hemicellulose und Lignin) reagieren kann. Allerdings sind die Reaktionen der organischen Phase mit dem Wasser jedoch wegen der unterschiedlichen Polarität erschwert. So ist es beispielsweise möglich, PMDI mit Wasser zu überschichten, ohne dass eine signifikante Reaktion an der Grenzfläche zu beobachten ist. Diese Nichtmischbarkeit führt dazu, dass die Reaktion zwischen dem Isocyanat-Bindemittel und dem Wasser erst bei Temperaturen um 100°C mit einer hohen Reaktionsgeschwindigkeit in Gang kommt, wobei das Wasser dann gegenüber anderen möglichen Reaktionspartnern den Vorteil hat, dass Wasserdampf eine hohe Mobilität aufweist und sterische Gründe kein Reaktionshindernis darstellen. Somit können die Vorteile der Erfindung durch einen Lösungsvermittler erreicht werden, der eine Durchmischung bzw. eine Emulsion der beiden Phasen unterstützt.

Aufgrund der Reaktion des Isocyanat-Bindemittels mit Hydroxygruppen beim Aushärten scheidet eine Vielzahl von nicht-ionischen Tensiden als Lösungsvermittler aus, da diese meist über solche Hydroxygruppen verfügen, wie beispielsweise Glykole oder Phenole. Auch nicht-ionische Tenside auf Zuckerbasis scheiden aus den gleichen Gründen aus.

Da der Lösungsvermittler nur in geringem Umfang und bevorzugt nahezu gar nicht an der Reaktion des Isocyanat-Bindemittels beim Härten beteiligt ist, wird der Lösungsvermittler in vorteilhafter Weise nur in geringen Mengen benötigt, sodass dieser keinen negativen Einfluss auf die späteren technologischen Eigenschaften des Holzwerkstoffs und insbesondere von Platten hat. Dies ergibt sich insbesondere daraus, dass ein Lösungsvermittler in der Regel in einer Menge von ein bis zwei Zehnerpotenzen niedriger eingesetzt wird als ein im Stand der Technik üblicher Härter. Weiterhin ermöglicht der Einsatz des Lösungsvermittlers ein Herstellen eines plattenförmigen Holzwerkstoffs, insbesondere mit einer kontinuierlichen Pressvorrichtung, wobei dieses Herstellen aufgrund des Lösungsvermittlers etwa 10 % schneller erfolgen kann. Somit ermöglicht der Lösungsvermittler eine schnelle, kostengünstige und gezielte Herstellung von hochwertigen Holzwerkstoffen.

Unter einer Bindemittelzusammensetzung wird eine Zusammensetzung verstanden, die zur Zugabe und zum Verkleben von Spanmaterial für einen Holzwerkstoff vorgesehen ist, wobei die Bindemittelzusammensetzung bevorzugt derart gebildet ist, dass ausschließlich aus dem Spanmaterial sowie der Bindemittelzusammensetzung ein Holzwerkstoff hergestellt werden kann. Grundsätzlich ist es jedoch auch möglich, dem Holzwerkstoff weitere Bestandteile, wie beispielsweise Hilfs- und Füllstoffe, hinzuzufügen. Dabei kann die Bindemittelzusammensetzung bereits gebrauchsfertig vorliegen und/oder aus einer einzigen Komponente gebildet sein.

Alternativ kann die Bindemittelzusammensetzung aber auch aus mehreren, getrennt bereitgestellten Komponenten, insbesondere aus zwei Komponenten, gebildet sein, die erst vor oder bei dem Gebrauch zusammengeführt und vermischt werden. Dabei kann insbesondere die organische Phase die eine Komponente und die wässrige Phase die andere Komponente sein, wobei der Lösungsvermittler bevorzugt in der wässrigen Phase enthalten ist. Darüber hinaus ist es jedoch auch denkbar, dass der Lösungsvermittler als Salz oder gelöst als weitere, insbesondere dritte Komponente bereitgestellt und/oder erst zum Gebrauch zugegeben wird. Die gebrauchsfertige Bindemittelzusammensetzung aus einer oder mehreren dann bereits gemischten Komponenten wird häufig auch als Leim oder Harz bezeichnet und entsprechend wird das Aufbringen des Bindemittels auf das Spanmaterial als Beleimen bezeichnet.

Weiterhin ist es insbesondere denkbar, dass die mehreren Komponenten der Bindemittelzusammensetzung erst auf der Oberfläche des zu verklebenden Materials, insbesondere des Spanmaterials, zusammentreffen, wobei bevorzugt erst eine erste Komponente, insbesondere eine wässrige Phase und/oder der Lösungsvermittler, auf und/oder in das Spanmaterial gebracht und anschließend die organische Phase mit dem wenigstens einen Isocyanat-Bindemittel zugegeben wird.

Der Holzwerkstoff kann grundsätzlich ein beliebiger Werkstoff sein, der mehrheitlich, bevorzugt abgesehen von der Bindemittelzusammensetzung zu wenigstens 90 % aus Holz, Pflanzenfasern und/oder einem daraus hergestellten Material durch ein Verbinden mehrerer Stücke dieses Materials mit einer Bindemittelzusammensetzung gebildet ist. Bevorzugt handelt es sich dabei um wenigstens ein Spanmaterial. Der Holzwerkstoff kann dabei grundsätzlich eine beliebige Form aufweisen, wobei plattenförmige Holzwerkstoffe und insbesondere Lignocellulose und/oder faserhaltige Platten, Spanplatten und/oder Grobspanplatten bevorzugt sind.

Das Spanmaterial kann grundsätzlich beliebige Pflanzenspäne und/oder -fasern aufweisen und ist bevorzugt im Wesentlichen aus Pflanzenspänen gebildet. Besonders bevorzugt wird das Spanmaterial aus Holz hergestellt. Ganz besonders bevorzugt besteht das Spanmaterial aus langen Spänen (strands) und/oder groben Spänen, insbesondere zum Herstellen einer Grobspanplatte, auch OSB (oriented strand boards) genannt. Die zur Herstellung einer Grobspanplatte hergestellten oder bereitgestellten Holzspäne können eine Länge zwischen 50 bis 200 mm, bevorzugt 70 bis 180 mm, insbesondere bevorzugt 90 bis 150 mm; eine Breite zwischen 5 bis 50 mm, bevorzugt 10 bis 30 mm, insbesondere bevorzugt 15 bis 20 mm; und eine Dicke zwischen 0,1 und 2 mm, bevorzugt zwischen 0,3 und 1,5 mm, insbesondere bevorzugt zwischen 0,4 und 1 mm aufweisen. Für Spanplatten sind die Spangrößen für Deck- und/oder Mittelschicht bevorzugt im Bereich von < 1 mm bis ca. 30 mm.

Obwohl das Formen des Holzwerkstoffs grundsätzlich in beliebiger Weise vorgenommen werden kann, erfolgt es bevorzugt als kontinuierlicher Prozess, insbesondere durch Aufstreuen des beleimten Spanmaterials auf eine Fördervorrichtung, insbesondere auf ein Förderband, und durch Verpressen des beleimten Spanmaterials zu dem Holzwerkstoff. Das Formen des Holzwerkstoffs und insbesondere das Verpressen erfolgt bevorzugt unter hohem Druck und/oder bei einer hohen Temperatur, bevorzugt von wenigstens 150°C, besonders bevorzugt zwischen 170°C und 220°C und ganz besonders bevorzugt zwischen 180°C und 220°C.

Insbesondere bevorzugt wird das beleimte Spanmaterial zum Herstellen einer Grobspanplatte in Streuapparaturen alternierend längs und quer zur Produktionsrichtung gestreut, sodass das Spanmaterial kreuzweise, besonders bevorzugt in wenigstens drei Schichten angeordnet ist, insbesondere einer unteren Deckschicht, einer Mittelschicht und einer oberen Deckschicht. Die Streurichtung von unterer und oberer Deckschicht ist dabei bevorzugt gleich und/oder weicht von der Streurichtung der Mittelschicht ab. Insbesondere bevorzugt weicht die Streurichtung der Mittelschicht von der Streurichtung der beiden Deckschichten ab. Generell bevorzugt ist der Aufbau des Holzwerkstoffs und insbesondere eines plattenförmigen Holzwerkstoffs mehrlagig bzw. mehrschichtig.

Grundsätzlich kann der Holzwerkstoff in alle Raumrichtungen homogen aufgebaut sein, wobei jedoch bevorzugt ein mehrlagiger bzw. mehrschichtiger Aufbau und besonders bevorzugt in sich unterscheidenden Schichten, ganz besonders bevorzugt entlang einer Raumrichtung und insbesondere besonders bevorzugt in Bezug auf die Dicke des Holzwerkstoffs erfolgt. Dabei können sich die einzelnen Schichten insbesondere in ihrer Dicke, ihrer Dichte, in der Orientierung des Spanmaterials, in der Zusammensetzung des Spanmaterials, in den Dimensionen des Spanmaterials, in dem Anteil der enthaltenen Bindemittelzusammensetzung und/oder in der chemischen Zusammensetzung der Bindemittelzusammensetzung voneinander unterscheiden.

Das Herstellen des Spanmaterials erfolgt bevorzugt durch ein Abschälen von entrindetem Rundholz, bevorzugt Nadelhölzer, in Längsrichtung und/oder durch rotierende Messer. Weiterhin bevorzugt wird das hergestellte Spanmaterial vor der Zugabe des Bindemittels bei hohen Temperaturen getrocknet, insbesondere um die natürliche Feuchtigkeit des Spanmaterials zu reduzieren. Besonders bevorzugt liegt die Feuchtigkeit des Spanmaterials nach dem Trocknen unter 10% und ganz besonders bevorzugt unter 7 %, um Spalter beim späteren Verpressen durch starke Dampfbildung zu vermeiden.

Die Zugabe der Bindemittelzusammensetzung zu dem Spanmaterial ist bevorzugt ein Beleimen wenigstens eines Teils und bevorzugt des gesamten Spanmaterials als Ausgangsmaterial für den Holzwerkstoff. Dabei wird weiterhin bevorzugt die Bindemittelzusammensetzung fein verteilt auf das Spanmaterial aufgebracht. Alternativ ist es denkbar, dass erst eine erste Komponente der Bindemittelzusammensetzung und anschließend erst die zweite Komponente aufgebracht wird. Die Menge der Bindemittelzusammensetzung, insbesondere im Falle der Verwendung von PMDI als Bindemittel, beträgt bevorzugt 1 bis 10 Gew%, besonders bevorzugt 2 bis 7 Gew%, insbesondere 3 Gew% bezogen auf die Gesamtmenge des Spanmaterials.

Bei dem erfindungsgemäßen Holzwerkstoff ist nach dessen Herstellung die Bindemittelzusammensetzung bevorzugt vollständig gehärtet, wobei insbesondere bevorzugt das Isocyanat-Bindemittel mit dem Wasser der wässrigen Phase zu Carbamidsäuren und/oder weiter zu den entsprechenden Aminen und/oder Polyharnstoffen reagiert ist. Dabei besteht die gehärtete Bindemittelzusammensetzung bevorzugt im Wesentlichen aus Polyharnstoffen, dem Lösungsvermittler und/oder weiteren Bestandteilen der organischen und/oder wässrigen Phase.

Erfindungsgemäß weist die Bindemittelzusammensetzung wenigstens ein Isocyanat-Bindemittel auf. Dabei kann die Bindemittelzusammensetzung grundsätzlich, insbesondere in Abhängigkeit der gewünschten Eigenschaften des hergestellten Holzwerkstoffs, nur ein einziges Bindemittel oder aber ein Gemisch aus mehreren Bindemitteln aufweisen, wobei die weiteren Bindemittel ebenfalls Isocyanat-Bindemittel oder aber auch beliebige andere Bindemittel sein können. Dabei beträgt der Anteil aller Bindemittel, insbesondere des Isocyanat-Bindemittels, in der Bindemittelzusammensetzung bevorzugt zwischen 60 % und 99 %, besonders bevorzugt wenigstens 70 % und ganz besonders bevorzugt wenigstens 85 %. Der Wasseranteil bzw. der Anteil der wässrigen Phase an der Bindemittelzusammensetzung beträgt bevorzugt zwischen 0 und 15 %, besonders bevorzugt zwischen 0,01 und 10 % und ganz besonders bevorzugt zwischen 0,5 und 8 %.

Erfindungsgemäß weist die Bindemittelzusammensetzung wenigstens einen, bevorzugt genau einen Lösungsvermittler auf, wobei es jedoch auch grundsätzlich denkbar ist, mehrere chemisch unterschiedliche Lösungsvermittler zugleich einzusetzen. Der erfindungsgemä-ße Lösungsvermittler ermöglicht grundsätzlich ein besseres Durchmischen und/oder das Bilden einer Emulsion der wässrigen Phase mit der organischen Phase, insbesondere mit dem Isocyanat-Bindemittel, wobei dann das Wasser ganz besonders bevorzugt der Reaktand zum Härten des Bindemittels ist. Entsprechend ermöglicht bzw. fördert der Lösungsvermittler bevorzugt ein Lösen bzw. eine Durchmischung der wässrigen Phase und der organischen Phase, wodurch die Reaktionspartner der Reaktion zum Aushärten des Bindemittels in unmittelbaren Kontakt gelangen und eine Reaktion des Wassers mit dem Isocyanat erfolgen kann. Dadurch wird in einfacher Weise eine gut steuerbare Beschleunigung der Aushärtung der Bindemittelzusammensetzung erreicht.

Zwar beschleunigt der Lösungsvermittler die Reaktion des Härtens des Isocyanat-Bindemittels, jedoch ist der Lösungsvermittler bevorzugt selbst nicht direkt an der Reaktion beteiligt und/oder wirkt katalytisch beim Aushärten des Isocyanat-Bindemittels. Insbesondere bevorzugt wird der Lösungsvermittler derart gewählt, dass dieser nicht an einer Aktivierung der Isocyanat-Gruppe des Bindemittels beteiligt ist und/oder bei dem Aushärten der Bindemittelzusammensetzung nicht verbraucht wird. Der Lösungsvermittler führt zu einer geringeren notwendigen Reaktionstemperatur und/oder zu einer verkürzten Reaktionszeit und ermöglicht zudem eine gute Steuerbarkeit der Reaktionskinetik. Dabei besteht bevorzugt ein linearer Zusammenhang zwischen der Gelierzeit bzw. der Dauer des Härtens und der Menge des eingesetzten Lösungsvermittlers.

Erfindungsgemäß weist der Lösungsvermittler keine Hydroxygruppen und insbesondere keine sauren und/oder alkoholischen Hydroxygruppen auf, die dazu führen könnten, dass der Lösungsvermittler als Reaktand an der Reaktion des Aushärtens des Isocyanat-Bindemittels teilnimmt und dabei gebunden wird, sodass dieser nicht weiter als Lösungsvermittler zur Verfügung stehen würde. Weiterhin bevorzugt ist der Lösungsvermittler ionisch, insbesondere da nicht-ionische Lösungsvermittler zumeist mit dem Isocyanat-Bindemittel reaktionsfähig sind. Nicht-ionische und/oder Hydroxygruppen aufweisende Lösungsvermittler sollten insbesondere vermieden werden, da diese zumeist sofort bei der Zugabe und/oder bereits bei zu niedrigen Temperaturen ein Aushärten des Bindemittels verursachen und somit zu unerwünschten Prozesseigenschaften und/oder zu einem erhöhten Bindemittelbedarf führen.

Die wässrige und die organische Phase sind grundsätzlich nicht vollständig mischbar, bevorzugt nur gering mischbar und besonders bevorzugt - ggf. bis auf Kleinstmengen - nicht mischbar. Entsprechend ist die Bindemittelzusammensetzung, zumindest zum Zeitpunkt der Zugabe der Bindemittelzusammensetzung zu einem Spanmaterial, bevorzugt ein mehrphasiges Gemisch und/oder eine Emulsion, das sowohl langfristig stabil sein kann als auch sich im Laufe der Zeit wieder entmischen kann.

Obwohl die erfindungsgemäße Bindemittelzusammensetzung einen beliebigen Lösungsvermittler aufweisen kann, ist es bevorzugt, dass der Lösungsvermittler eine grenzflächenaktive Substanz ist und/oder die Grenzflächenspannung zwischen der wässrigen Phase und der organischen Phase herabsetzt, um ein schnelleres und/oder besseres Durchmischen der beiden Phasen zu ermöglichen. Eine bevorzugte Ausgestaltung der erfindungsgemäßen Bindemittelzusammensetzung sieht weiterhin vor, dass der Lösungsvermittler ein ionisches Tensid, bevorzugt auf Basis von organischen und besonders bevorzugt aromatischen Verbindungen, aufweist und besonders bevorzugt ein solches Tensid ist.

Erfindungsgemäß weist der Lösungsvermittler ein Sulfonsäure-Derivat oder -Salz auf und bevorzugt ist der Lösungsvermittler ein Sulfonsäure-Derivat oder -Salz. Entsprechend ist der Lösungsvermittler bevorzugt ein organisches Salz und/oder weist bevorzugt einen polaren sowie einen unpolaren Bereich auf. Der unpolare Bereich ist dabei besonders bevorzugt im Wesentlichen aus aliphatischen Kohlenwasserstoffen und insbesondere im Wesentlichen aus Alkanen bzw. als Alkylrest gebildet, wobei ein langkettiger und/oder im Wesentlichen unverzweigter Alkylrest bevorzugt ist. Der polare Bereich weist bevorzugt eine Sulfonatgruppe, eine Carboxylgruppe, eine Estergruppe, eine Ketogruppe und/oder eine andere sauerstoffreiche funktionelle Gruppe auf.

Bevorzugt ist der Lösungsvermittler eine ionische Substanz und weist dabei besonders bevorzugt ein organisches Anion auf, das sowohl einfach, als auch mehrfach geladen sein kann. Entsprechend weist der Lösungsvermittler bevorzugt wenigstens ein Gegenion und besonders bevorzugt genau ein Gegenion und/oder mehrere chemisch gleiche Gegenionen auf. Ebenfalls bevorzugt ist das Gegenion ein Kation, das besonders bevorzugt einfach positiv geladen ist. Weiterhin besonders bevorzugt ist das Kation ein Alkalimetall-Kation und insbesondere bevorzugt ein Natrium-Ion. Entsprechend ist der Lösungsvermittler bevorzugt ein Natrium-Salz bzw. liegt in Form eines Natriumsalzes vor. Alternativ kann der Lösungsvermittler auch gelöst, insbesondere als gelöstes Natriumsalz vorliegen.

Erfindungsgemäß weist die Bindemittelzusammensetzung einen oder mehrere Lösungsvermittlern aus der Gruppe N,N-Naphtalensulfonsäure, Dodecansulfonsäure oder Diethylbenzyl-Natriumsulfosuccinat und/oder dem jeweiligen Natrium-Salz auf, insbesondere N,N-Naphtalensulfonat, Dodecansulfonat oder Natriumsulfosuccinat, das auch als Sulfobernsteinsäure-bis-2-ethylhexylester oder Docusat-Natrium bekannt ist.

Obwohl ein beliebiges Isocyanat-Bindemittel in der Bindemittelzusammensetzung enthalten sein kann und bevorzugt dessen Hauptbindemittel bildet, ist es bevorzugt, dass das Isocyanat-Bindemittel polymeres Diphenylmethandiisocyanat (PMDI) aufweist und insbesondere polymeres Diphenylmethandiisocyanat ist. Ganz besonders bevorzugt ist das Diphenylmethandiisocyanat das einzige Isocyanat-Bindemittel und insbesondere bevorzugt generell das einzige Bindemittel in der Bindemittelzusammensetzung. Grundsätzlich ist aber auch eine Verwendung von beispielsweise Toluol-2,4-diisocyanat (TDI), Hexamethylendiisocyanat (HDI), Methylendiphenyldiisocyanat (MDI), meta-Tetramethylxylylendiisocyanat (TMXDI), Isophorondiisocyanat (IPDI) und/oder 4,4'-Diisocyanatodicyclohexylmethan (H12MDI) oder eines weiteren Isocyanats als Isocyanat-Bindemittel einzeln oder in Kombination, insbesondere mit polymerem Diphenylmethandiisocyanat (PMDI), denkbar.

Gemäß einer vorteilhaften Weiterbildung der erfindungsgemäßen Bindemittelzusammensetzung ist die Bindemittelzusammensetzung formaldehydfrei und/oder setzt vor, während oder nach dem Aushärten kein Formaldehyd frei, wodurch eine besondere Eignung zur Verwendung in Innenräumen vorliegt.

Um eine gute Wirkung des Lösungsvermittlers zu erreichen, ist der Lösungsvermittler bevorzugt hoch wasserlöslich und/oder gut in Wasser dispergierbar. Dabei wird der Lösungsvermittler bevorzugt in einer wässrigen Lösung bzw. einer Dispersion in Wasser mit einem Massenanteil von bevorzugt wenigstens 25 %, besonders bevorzugt wenigstens 50 %, ganz besonders bevorzugt wenigstens 60 % und insbesondere bevorzugt wenigstens 70 % eingesetzt bzw. zubereitet und dann der Bindemittelzusammensetzung, der wässrigen Phase der Bindemittelzusammensetzung und/oder dem Spanmaterial zugesetzt.

Grundsätzlich ist ein Anteil des Lösungsvermittlers zwischen 0,01 % bis 5 % oder zwischen 0,02 % bis 2 % bezogen auf die Masse des Isocyanat-Bindemittels möglich. Erfindungsgemäß beträgt der Anteil des Lösungsvermittlers jedoch zwischen 0,05 % und 1,0 % bezogen auf die Masse des Isocyanat-Bindemittels. Bei einer vorteilhaften Ausgestaltung der erfindungsgemäßen Bindemittelzusammensetzung beträgt der Anteil des Lösungsvermittlers 0,1 % bis 0,5 % bezogen auf die Masse des Isocyanat-Bindemittels. Dabei ist die zu der Bindemittelzusammensetzung zugesetzte Menge des Lösungsvermittlers wesentlich für die Steuerung der Reaktionsgeschwindigkeit des Isocyanat-Bindemittels und/oder des Aushärtens des Bindemittels. Alternativ oder zusätzlich kann eine Steuerung über eine Einstellung bzw. Anpassung der Temperatur erfolgen.

Eine bevorzugte Weiterbildung des erfindungsgemäßen Verfahrens zum Herstellen eines Holzwerkstoffs sieht vor, dass die Zugabe der Bindemittelzusammensetzung zu dem Spanmaterial für wenigstens eine Schicht und bevorzugt alle Schichten des Holzwerkstoffs in Form einer Zugabe von zwei getrennten Komponenten der Bindemittelzusammensetzung erfolgt, wobei die eine Komponente die das Isocyanat-Bindemittel aufweisende, organische Phase ist und die andere Komponente die wässrige Phase und/oder eine Paraffinemulsion ist, in der der Lösungsvermittler enthalten, insbesondere gelöst ist. Dabei erfolgt die Zugabe des Lösungsvermittlers zur wässrigen Phase oder zur Paraffinemulsion weiterhin bevorzugt als eine hoch konzentrierte Lösung mit einem Massenanteil des Lösungsvermittlers von wenigstens 70 %. Ebenfalls bevorzugt erfolgt das Zusammentreffen beider Komponenten der Bindemittelzusammensetzung auf der Oberfläche des Spanmaterials. Zusätzlich oder alternativ kann auch erst eine der Komponenten, insbesondere die wässrige Phase und/oder der Lösungsvermittler, zu dem Spanmaterial gegeben und dabei insbesondere gleichmäßig auf dessen Oberfläche aufgetragen werden und nachfolgend dann die zweite Komponente, insbesondere das Isocyanat-Bindemittel bzw. die organische Phase, hinzugefügt werden. Dies wird bevorzugt in einer Beleimtrommel oder in einem Trogmischer durchgeführt. Alternativ ist es auch möglich, dass die aus wenigstens zwei und bevorzugt aus genau zwei Komponenten bestehende Bindemittelzusammensetzung erst unmittelbar vor der Zugabe zu dem Spanmaterial zusammengefügt wird, indem bevorzugt die organische Phase und die wässrige Phase, insbesondere mit dem Lösungsvermittler, ineinander vermengt werden. Dies kann vor der Beleimtrommel oder dem Trogmischer unter Zuhilfenahme z. B. eines Statikmischers erfolgen.

Erfindungsgemäß weist der Holzwerkstoff mindestens eine Schicht auf, wobei ein Aufbau in mehreren Schichten und dabei besonders in wenigstens drei Schichten, insbesondere einer unteren Deckschicht, einer Mittelschicht und einer oberen Deckschicht, vorteilhaft ist. Dabei weist weiterhin bevorzugt wenigstens eine der Schichten, bevorzugt die Mittelschicht, eine Bindemittelzusammensetzung mit einem Lösungsvermittler auf und wenigstens eine weitere Schicht, bevorzugt die untere oder die obere Deckschicht und besonders bevorzugt die untere und die obere Deckschicht, eine Bindemittelzusammensetzung ohne Lösungsvermittler auf. Generell ist bevorzugt, dass nur eine einzige Schicht, insbesondere eine Mittelschicht, oder nur alle im Inneren des Holzwerkstoffs angeordneten und/oder keine Deckschicht bildenden Schichten eine Bindemittelzusammensetzung mit einem Lösungsvermittler aufweisen.

Schließlich weist eine vorteilhafte Ausgestaltung des erfindungsgemäßen Holzwerkstoffs einen Aufbau mit wenigstens drei Schichten, insbesondere wenigstens einer unteren Deckschicht, einer Mittelschicht und einer oberen Deckschicht auf, wobei wenigstens zwei der Schichten, bevorzugt darunter die Mittelschicht, und besonders bevorzugt alle Schichten eine Bindemittelzusammensetzung mit einem Lösungsvermittler aufweisen, wobei der Mengenanteil des Lösungsvermittlers in der Mittelschicht höher ist als in den Deckschichten. Ein unterschiedlicher Anteil des Lösungsvermittlers kann dabei genutzt werden, den unterschiedlich schnellen Wärmeeintrag, insbesondere beim Pressen von Holzwerkstoffplatten, zu berücksichtigen und somit ein besonders gleichmäßiges Aushärten des Bindemittels über die gesamte Dicke des Holzwerkstoffs zu gewährleisten. Besonders bevorzugt steigt der Anteil des Lösungsvermittlers von den Deckschichten hin zu den Schichten in der Mitte des Holzwerkstoffs an. Bevorzugt ist der Anteil des Lösungsvermittlers einer Mittelschicht zwischen 5 % und 500 %, besonders bevorzugt zwischen 10 % und 200 % und ganz besonders bevorzugt zwischen 20 % und 100 % höher als der Anteil des Lösungsvermittlers in einer Deckschicht, insbesondere in beiden Deckschichten.

Die Erfindung wird nachfolgend auf Basis mehrerer Vergleichsversuche sowie in Form von Ausführungsbeispielen näher erläutert.

### Ausführungsbeispiel 1:

In einem Reagenzglas werden 20 ml Wasser, in dem eine in Tabelle 1 angegebene Menge eines Lösungsvermittlers enthalten ist, mit der gleichen Menge polymeren Diphenylmethandiisocyanats (PMDI), einem Isocyanat-Bindemittel, als organische Phase überschichtet. Als Lösungsvermittler werden jeweils die Natriumsalze der N,N-Naphtalensulfonsäure und der Dodecansulfonsäure sowie Dodecylbenzolsulfonat als Natriumsalz und Diethylbenzyl-Natriumsulfosuccinat eingesetzt. Anschließend wird das Reagenzglas in ein Wasserbad überführt, das mit Hilfe einer darunter befindlichen Heizplatte auf die, in der Spalte 4 der Tabelle 1 angegebene Temperatur gebracht wird. Mit Hilfe eines Glasstabes wird in regelmäßigen Zeitabständen durch Eintauchen in das PMDI die Gelierzeit bestimmt. Die Gelierzeit galt als erreicht, wenn das PMDI beim Eintauchen keine flüssige, sondern eine feste, krümelige Konsistenz hatte.

**Tabelle 1: Vergleichsversuche ohne und mit verschiedenen Lösungsvermittlern**

| Nr. | Katalysator | Katalysator in % bez. auf PMDI | T in °C | Gelierzeit in min |
|---|---|---|---|---|
| 1 | - | 0 | 40 | 41:01 |
| 2 | N,N-Naphtalensulfonsäure Na-Salz | 0,1 | 40 | 39:32 |
| 3 | Dodecansulfonsäure Na-Salz | 0,1 | 40 | 60:00 |
| 4 | Dodecylbenzolsulfonat Na-Salz | 0,1 | 40 | 42:23 |
| 5 | Diethylbenzyl-Natriumsulfosuccinat | 0,1 | 40 | 40 44 |
| 6 | - | 0 | 80 | 12:44 |
| 7 | N,N-Naphtalensulfonsäure Na-Salz | 0,1 | 80 | 7:56 |
| 8 | Dodecansulfonsäure Na-Salz | 0,1 | 80 | 11:44 |
| 9 | Dodecylbenzolsulfonat Na-Salz | 0,1 | 80 | 39:45 |
| 10 | Diethylbenzyl-Natriumsulfosuccinat | 0,1 | 80 | 41:44 |
| 10 | N,N-Naphtalensulfonsäure Na-Salz | 0,2 | 80 | 5:37 |
| 11 | Dodecansulfonsäure Na-Salz | 0,2 | 80 | 10:41 |
| 12 | Dodecylbenzolsulfonat Na-Salz | 0,2 | 80 | 8:57 |
| 13 | Diethylbenzyl-Natriumsulfosuccinat | 0,2 | 80 | 11:09 |
| 14 | N,N-Naphtalensulfonsäure Na-Salz | 0,5 | 80 | 3:55 |
| 15 | Dodecansulfonsäure Na-Salz | 0,5 | 80 | 11:01 |
| 16 | Dodecylbenzolsulfonat Na-Salz | 0,5 | 80 | 8:47 |

Wie sich zeigt, wird durch die Zugabe eines ionischen Tensids als Lösungsvermittler die Gelierzeit deutlich reduziert. Dies ist besonders bei einer Konzentration von 0,5% ionischem Tensid auf PMDI zu beobachten. Besonders wirksam sind dabei die ionischen Tenside auf Basis von aromatischen Verbindungen als Natriumsalz, wie das Natriumsalz der N,N-Naphtalensulfonsäure. Durch eine variable Zugabe von ionischen Tensiden als Lösungsvermittler und somit auch als Katalysatoren kann die Aushärtung des PMDI präzise gesteuert werden. Bei Raumtemperatur oder leicht erhöhten Temperaturen ist nahezu keine Katalyse feststellbar. Besonders positiv ist, dass die Tenside eine sehr gute Wasserlöslichkeit besitzen und damit in dem System als hochkonzentrierte Lösung eingesetzt werden können (Konzentration > 70 Gew%). Dies ist insbesondere in der Mittelschicht eines mehrschichtigen Holzwerkstoffs relevant, da dort üblicherweise in der Beleimung kein zusätzliches Wasser zugesetzt wird. Dort kann dann der Katalysator zum Beispiel in Form einer Paraffinemulsion zugegeben werden. Die Zugabe des Tensids kann an jeder beliebigen Stelle in der Produktion auf das Spanmaterial bzw. die Strands oder zu dem PMDI erfolgen. Dabei ist die Dosierung in der Beleimtrommel (Coil) bevorzugt.

### Ausführungsbeispiel 2:

Buchenjoche werden mit der Seite, die später zur Verklebung verwendet werden sollen, eine Stunde in eine 0,5 Gew%ige Lösung von N,N-Naphtalensulfonsäure Natriumsalz in Wasser gelegt. Danach werden sie auf einem zweiten Joch, auf das Diphenylmethandiisocyanat (PMDI) in einer Menge von ca. 100 g/m² aufgebracht worden ist, mit Hilfe einer Schraube und einem Drehmomentschlüssel mit identischer Kraft fixiert. Vergleichsproben ohne N,N-Naphtalensulfonsäure Natriumsalz, die lediglich in Wasser gelegt wurden, werden ebenfalls geprüft. Die Proben werden dann in einem Trockenschrank bei 80°C gelagert. Nach 10, 20, 30 und 40 Minuten werden jeweils Proben und Vergleichsproben entnommen. Diese Proben werden schnell auf Raumtemperatur abgekühlt und danach mit Hilfe einer Prüfmaschine die Querzugfestigkeit bestimmt.

**Tabelle 2: Prüfung der Querzugfestigkeit mit und ohne Lösungsvermittler**

| Aushärtungszeit in min | Nullprobe Querzug in N/mm² | N,N-Naphtalensulfonsäure Natriumsalz Querzug in N/mm² |
|---|---|---|
| 10 | 0 | 0,1 |
| 20 | 0,08 | 0,19 |
| 30 | 0,26 | 0,40 |
| 40 | 0,52 | 0,56 |

Wie aus der Tabelle 2 zu entnehmen ist, reagiert die Variante mit dem Lösungsvermittler früher als die Variante ohne Katalysator. Bei einer Aushärtungszeit von 40 Minuten ist der Effekt nicht mehr so stark ausgeprägt.

### Ausführungsbeispiel 3:

Bei der Herstellung von OSB (Oriented Strand Board) wird zu einer Bindemittelzusammensetzung enthaltend das Isocyanat-Bindemittel polymeres Diphenylmethandiisocyanat (PMDI) N,N-Naphtalensulfonsäure Na-Salz in einer Menge von 0,5 Gew% bezogen auf die Masse des PMDI als Lösungsvermittler und Katalysator zugegeben. Die Bindemittelzusammensetzung ist dabei zum Beleimen des Spanmaterials einer Mittelschicht des OSB vorgesehen. Dabei wird der Lösungsvermittler und Katalysator als wässrige Lösung über einen Statikmischer unmittelbar vor dem Beleimen des Spanmaterials zugegeben, wobei das Volumenverhältnis der organischen Phase zu der zugegebenen wässrigen Phase 1:0,4 beträgt.

Zu der PMDI aufweisenden organischen Phase der Bindemittelzusammensetzung, die für das Beleimen des Spanmaterials der Deckschichten vorgesehen ist, wird kein Lösungsvermittler zugegeben. Anschließend wird das jeweilige Spanmaterial mit den beiden Bindemittelzusammensetzungen in der Beleimtrommel besprüht und nach dem Streuen für eine 18 mm Platte einer Conti-Presse zugeführt. Dabei wurde die Geschwindigkeit gegenüber der Produktion ohne Katalysator schrittweise um 10 % gesteigert. Bei der Produktion wurden keine Spalter oder andere Probleme beobachtet. Bei der Prüfung der technologischen Werte (Querzugfestigkeit, Quellung) wurden gegenüber der Produktion bei Standardgeschwindigkeit keine Unterschiede festgestellt.

### Ausführungsbeispiel 4:

Ein Lösungsvermittler, insbesondere N,N-Naphtalensulfonsäure Na-Salz, wird in der Deck- und der Mittelschicht von Holzwerkstoffplatten bei der Verwendung von PMDI als Leim eingesetzt. Dabei wird die Dosierung in der Mittelschicht höher gewählt, da die Wärme der Presse die Mittelschicht verzögert erreicht. Dabei wird der Lösungsvermittler und Katalysator als wässrige Lösung zugegeben, wobei der Mittelschicht eine 0,2 Gew%ige Lösung und den Deckschichten eine 0,5 Gew%ige Lösung zugegeben wird. Ansonsten erfolgt die Herstellung der Holzwerkstoffplatten wie im Ausführungsbeispiel 3 angeben. Auch hier konnte die Produktionsgeschwindigkeit um ca. 10 % gesteigert werden.

## Patentansprüche

1. Bindemittelzusammensetzung zum Herstellen eines Holzwerkstoffs, insbesondere eines plattenförmigen Holzwerkstoffs, mit
- einer wenigstens ein Isocyanat-Bindemittel aufweisenden, organischen Phase,
- einer wässrigen Phase und
- einem ionischen und/oder alkoholische Hydroxygruppen-freien Lösungsvermittler zum schnellen Durchmischen beider Phasen und/oder zum Beschleunigen des Aushärtens des Isocyanat-Bindemittels, wobei
- der Lösungsvermittler eine oder mehrere Substanzen aus der Gruppe N,N-Naphtalensulfonsäure, Dodecansulfonsäure oder Diethylbenzyl-Natriumsulfosuccinat oder das jeweilige Natrium-Salz ist und
- der Anteil des Lösungsvermittlers zwischen 0,05 % und 1,0 % bezogen auf die Masse des Isocyanat-Bindemittels beträgt.

2. Bindemittelzusammensetzung zum Herstellen eines Holzwerkstoffs nach Anspruch 1, **dadurch gekennzeichnet, dass** der Lösungsvermittler eine grenzflächenaktive Substanz ist und/oder die Bildung einer Emulsion der beiden Phasen ermöglicht.

3. Bindemittelzusammensetzung zum Herstellen eines Holzwerkstoffs nach Anspruch 1 oder 2, **dadurch gekennzeichnet, dass** der Lösungsvermittler ein ionisches Tensid auf Basis von aromatischen Verbindungen ist.

4. Bindemittelzusammensetzung zum Herstellen eines Holzwerkstoffs nach wenigstens einem der vorhergehenden Ansprüche, **dadurch gekennzeichnet, dass** der Lösungsvermittler hoch wasserlöslich ist und bevorzugt wenigstens eine wässrige Lösung mit einem Massenteil des Lösungsvermittlers von 70 % erstellt werden kann.

5. Bindemittelzusammensetzung zum Herstellen eines Holzwerkstoffs nach wenigstens einem der vorhergehenden Ansprüche, **dadurch gekennzeichnet, dass** das Isocyanat-Bindemittel polymeres Diphenylmethandiisocyanat ist.

6. Bindemittelzusammensetzung zum Herstellen eines Holzwerkstoffs nach wenigstens einem der vorhergehenden Ansprüche, **gekennzeichnet durch** einen Anteil des Lösungsvermittlers von 0,1 % bis 0,5 % bezogen auf die Masse des Isocyanat-Bindemittels.

7. Bindemittelzusammensetzung zum Herstellen eines Holzwerkstoffs nach wenigstens einem der vorhergehenden Ansprüche, **dadurch gekennzeichnet, dass** der Lösungsvermittler nicht an der Reaktion zum Aushärten des Isocyanat-Bindemittels beteiligt ist und/oder katalytisch beim Aushärten des Isocyanat-Bindemittels wirkt.

8. Verfahren zum Herstellen eines Holzwerkstoffs, insbesondere eines plattenförmigen Holzwerkstoffs, mit den Schritten:
- Herstellen und/oder Bereitstellen eines Spanmaterials,
- Zugabe einer Bindemittelzusammensetzung zu dem Spanmaterial, wobei die Bindemittelzusammensetzung eine wenigstens ein Isocyanat-Bindemittel aufweisende, organische Phase und eine zweite, mit der organischen Phase nicht mischbare wässrige Phase sowie einen der Lösungsvermittler zum schnellen Durchmischen und/oder zum Beschleunigen des Aushärtens des Isocyanat-Bindemittels aufweist, wobei der Lösungsvermittler eine oder mehrere Substanzen aus der Gruppe N,N-Naphtalensulfonsäure, Dodecansulfonsäure oder Diethylbenzyl-Natriumsulfosuccinat oder das jeweilige Natrium-Salz ist und der Anteil des Lösungsvermittlers zwischen 0,05 % und 1,0 % bezogen auf die Masse des Isocyanat-Bindemittels beträgt, und
- Formen des Holzwerkstoffs aus dem beleimten Spanmaterial, insbesondere Verpressen zu einem plattenförmigen Holzwerkstoff.

9. Verfahren zum Herstellen eines Holzwerkstoffs nach Anspruch 8, **dadurch gekennzeichnet, dass** die Zugabe der Bindemittelzusammensetzung zu dem Spanmaterial für wenigstens eine Schicht des Holzwerkstoffs in Form einer Zugabe von zwei getrennten Komponenten der Bindemittelzusammensetzung erfolgt, wobei die eine Komponente die das Isocyanat-Bindemittel aufweisende, organische Phase ist und die andere Komponente die wässrige Phase und/oder eine Paraffinemulsion ist, in der der Lösungsvermittler gelöst ist.

10. Verfahren zum Herstellen eines Holzwerkstoffs nach Anspruch 8, **dadurch gekennzeichnet, dass** die Zugabe des Lösungsvermittlers zu dem Spanmaterial in einer Beleimtrommel und/oder zugleich mit der Zugabe des Isocyanat-Bindemittels und/oder der wässrigen Phase erfolgt.

11. Holzwerkstoff, aufweisend wenigstens ein Spanmaterial sowie wenigstens eine ausgehärtete Bindemittelzusammensetzung in wenigstens einer Schicht des Holzwerkstoffs, wobei die Bindemittelzusammensetzung wenigstens ein ausgehärtetes Isocyanat-Bindemittel und einen Lösungsvermittler zum schnellen Durchmischen und/oder zum Beschleunigen des Aushärtens des Isocyanat-Bindemittels aufweist, wobei der Lösungsvermittler eine oder mehrere Substanzen aus der Gruppe N,N-Naphtalensulfonsäure, Dodecansulfonsäure oder Diethylbenzyl-Natriumsulfosuccinat oder das jeweilige Natrium-Salz ist und der Anteil des Lösungsvermittlers zwischen 0,05 % und 1,0 % bezogen auf die Masse des Isocyanat-Bindemittels beträgt.

12. Holzwerkstoff nach Anspruch 11, **gekennzeichnet durch** einen Aufbau in wenigstens drei Schichten, insbesondere einer unteren Deckschicht, einer Mittelschicht und einer oberen Deckschicht, wobei wenigstens eine der Schichten, bevorzugt die Mittelschicht, eine Bindemittelzusammensetzung mit einem Lösungsvermittler aufweist und ebenfalls bevorzugt wenigstens eine weitere Schicht eine Bindemittelzusammensetzung ohne Lösungsvermittler aufweist.

13. Holzwerkstoff nach Anspruch 11, **gekennzeichnet durch** einen Aufbau mit wenigstens einer unteren Deckschicht, einer Mittelschicht und einer oberen Deckschicht, wobei alle Schichten eine Bindemittelzusammensetzung mit einem Lösungsvermittler aufweisen, wobei der Mengenanteil des Lösungsvermittlers in der Mittelschicht höher ist als in den Deckschichten.

## Claims

1. Binder composition for manufacturing of a wood-based material, in particular a board-shaped wood-based material, comprising
- an organic phase comprising at least one isocyanate binder,
- an aqueous phase and
- a solubilizer, which is ionic and/or alcoholic hydroxy group-free, for rapid mixing of both phases and/or for accelerating the curing of the isocyanate binder, wherein
- the solubilizer is one or more substances selected from the group consisting of N,N-naphthalenesulfonic acid, dodecane sulfonic acid or diethylbenzyl sodium sulfosuccinate or the respective sodium salt, and
- the proportion of solubilizer is between 0.05% and 1.0% based on the mass of the isocyanate binder.

2. Binder composition for manufacturing a wood-based material according to claim 1, **characterized in that** the solubilizer is a surface active substance and/or allows the formation of an emulsion of the two phases.

3. Binder composition for manufacturing a wood-based material according to claim 1 or 2, **characterized in that** the solubilizer is an ionic surfactant based on aromatic compounds.

4. Binder composition for manufacturing a wood-based material according to at least one of the preceding claims, **characterized in that** the solubilizer is highly watersoluble and preferably at least an aqueous solution can be prepared with a solubilizer mass fraction of 70%.

5. Binder composition for manufacturing a wood-based material according to at least one of the preceding claims, **characterized in that** the isocyanate binder is polymeric diphenylmethane diisocyanate.

6. Binder composition for manufacturing a wood-based material according to at least one of the preceding claims, **characterized by** a solubilizer content of 0.1% to 0.5% based on the mass of the isocyanate binder.

7. Binder composition for manufacturing a wood-based material according to at least one of the preceding claims, **characterized in that** the solubilizer is not involved in the reaction for curing the isocyanate binder and/or does not act catalytically in the curing of the isocyanate binder.

8. Method for manufacturing a wood-based material, in particular a board-shaped wood-based material, having the steps:
- manufacturing and/or providing a chip material,
- addition of a binder composition to the chip material, the binder composition comprising an organic phase comprising at least one isocyanate binder and a second phase which is aqueous and immiscible with the organic phase, and one of the solubilizers for rapid mixing and/or for accelerating the curing of the isocyanate binder, the solubilizer being one or more substances from the group consisting of N,N-naphthalenesulfonic acid, dodecane sulfonic acid or diethylbenzyl sodium sulfosuccinate or the respective sodium salt, and the proportion of the solubilizer being between 0.05% and 1.0%, based on the mass of the isocyanate binder, and
- forming of the wood-based material from the glued chip material, in particular pressing into a board-shaped wood-based material.

9. Method for manufacturing a wood-based material according to claim 8, **characterized in that** the addition of the binder composition to the chip material for at least one layer of the wood-based material takes place in the form of an addition of two separate components of the binder composition, wherein one component is the organic phase comprising the isocyanate binder and the other component is the aqueous phase and/or a parafin emulsion in which the solubilizer is dissolved.

10. Method for manufacturing a wood-based material according to claim 8, **characterized in that** the solubilizer is added to the chip material in a glue drum and/or simultaneously with the addition of the isocyanate binder and/or the aqueous phase.

11. Wood-based material comprising at least a chip material and at least a cured binder composition in at least one layer of the wood-based material, wherein the binder composition comprises at least a cured isocyanate binder and a solubilizer for rapid mixing and/or for accelerating the curing of the isocyanate binder, wherein the solubilizer is one or more substances selected from the group consisting of N,N-naphthalenesulfonic acid, dodecane sulfonic acid or diethylbenzyl sodium sulfosuccinate or the respective sodium salt and the proportion of the solubilizer is between 0.05% and 1.0% based on the mass of the isocyanate binder.

12. Wood-based material according to claim 11, **characterized by** a structure in at least three layers, in particular a lower surface layer, a middle layer and an upper surface layer, wherein at least one of the layers, preferably the middle layer, comprises a binder composition with a solubilizer and likewise preferably at least one further layer comprises a binder composition without solubilizer.

13. Wood-based material according to claim 11, **characterized by** a structure comprising at least a lower surface layer, a middle layer and an upper surface layer, wherein all layers comprise a binder composition with a solubilizer, the amount of solubilizer in the middle layer being higher than in the surface layers.

## Revendications

1. Composition de liant pour la production d'un matériau à base de bois, en particulier d'un matériau à base de bois en forme de plaque, comprenant
- une phase organique comprenant au moins un liant isocyanate,
- une phase aqueuse et
- un solubilisant, qui est ionique et/ou sans groupe hydroxy alcoolique, pour mélanger rapidement les deux phases et/ou pour accélérer le durcissement du liant isocyanate, dans lequel
- le solubilisant est une ou plusieurs substances choisies dans le groupe constitué par l'acide N,N-naphtalènesulfonique, l'acide dodécane sulfonique ou le sulfosuccinate de diéthylbenzyle et de sodium ou leur sel de sodium respectif, et
- la proportion de solubilisant est comprise entre 0,05% et 1,0% par rapport à la masse du liant isocyanate.

2. Composition de liant pour la production d'un matériau à base de bois selon la revendication 1, **caractérisée par le fait que** le solubilisant est une substance tensioactive et/ou permet la formation d'une émulsion des deux phases.

3. Composition de liant pour la production d'un matériau à base de bois selon la revendication 1 ou 2, **caractérisée par le fait que** le solubilisant est un tensioactif ionique à base de composés aromatiques.

4. Composition de liant pour la production d'un matériau à base de bois selon au moins l'une des revendications précédentes, **caractérisée par le fait que** le solubilisant est très soluble dans l'eau et que, de préférence, au moins une solution aqueuse peut être préparée avec une fraction massique de solubilisant de 70 %.

5. Composition de liant pour la production d'un matériau à base de bois selon au moins l'une des revendications précédentes, **caractérisée par le fait que** le liant isocyanate est le diisocyanate de diphénylméthane polymère.

6. Composition de liant pour la production d'un matériau à base de bois selon au moins l'une des revendications précédentes, **caractérisée par** une proportion en solubilisant de 0,1 % à 0,5 % par rapport à la masse du liant isocyanate.

7. Composition de liant pour la production d'un matériau à base de bois selon au moins l'une des revendications précédentes, **caractérisée par le fait que** le solubilisant n'intervient pas dans la réaction de durcissement du liant isocyanate et/ou n'agit pas de manière catalytique dans le durcissement du liant isocyanate.

8. Procédé de production d'un matériau à base de bois, en particulier d'un matériau à base de bois en forme de plaque, comportant les étapes suivantes :
- la production et/ou la fourniture d'un matériau pour les copeaux,
- ajout d'une composition de liant au matériau en copeaux, la composition de liant comprenant une phase organique comprenant au moins un liant isocyanate et une seconde phase aqueuse et non miscible avec la phase organique, et l'un des solubilisants pour un mélange rapide et/ou pour accélérer le durcissement du liant isocyanate, le solubilisant étant une ou plusieurs substances du groupe constitué de l'acide N,N-naphtalènesulfonique, de l'acide dodécane sulfonique ou du sulfosuccinate de diéthylbenzyle et de sodium ou de leur sel de sodium respectif, et la proportion de solubilisant étant comprise entre 0,05 % et 1,0 %, sur la base de la phase organique.05% à 1,0%, par rapport à la masse du liant isocyanate, et
- la formation du matériau à base de bois à partir du matériau en copeaux collé, en particulier le pressage d'un matériau à base de bois en forme de plaque.

9. Procédé de production d'un matériau à base de bois selon la revendication 8, **caractérisé par le fait que** l'ajout de la composition de liant au matériau en copeaux pour au moins une couche du matériau à base de bois se fait sous la forme d'un ajout de deux composants séparés de la composition de liant, l'un des composants étant la phase organique comprenant le liant isocyanate et l'autre composant étant la phase aqueuse et/ou une émulsion de parafin dans laquelle le solubilisant est dissous.

10. Procédé de production d'un matériau à base de bois selon la revendication 8, **caractérisée par le fait que** le solubilisant est ajouté au matériau en copeaux dans un tambour à colle et/ou simultanément à l'ajout du liant isocyanate et/ou de la phase aqueuse.

11. Matériau à base de bois comprenant au moins un matériau en copeaux et au moins une composition de liant durcie dans au moins une couche du matériau à base de bois, dans lequel la composition de liant comprend au moins un liant isocyanate durci et un solubilisant pour un mélange rapide et/ou pour accélérer le durcissement du liant isocyanate, dans laquelle le solubilisant est une ou plusieurs substances choisies dans le groupe constitué de l'acide N,N-naphtalènesulfonique, de l'acide dodécane sulfonique ou du sulfosuccinate de diéthylbenzyle et de sodium ou de leur sel de sodium respectif, et la proportion de solubilisant est comprise entre 0,05 % et 1,0 % sur la base de la composition du liant.05% et 1,0% par rapport à la masse du liant isocyanate.

12. Matériau à base de bois selon la revendication 11, **caractérisé par** une structure en au moins trois couches, en particulier une couche de surface inférieure, une couche intermédiaire et une couche de surface supérieure, dans laquelle au moins une des couches, de préférence la couche intermédiaire, comprend une composition de liant avec un solubilisant et de même, de préférence, au moins une autre couche comprend une composition de liant sans solubilisant.

13. Matériau à base de bois selon la revendication 11, **caractérisé par** une structure comprenant au moins une couche de surface inférieure, une couche intermédiaire et une couche de surface supérieure, dans laquelle toutes les couches comprennent une composition de liant avec un solubilisant, la quantité de solubilisant dans la couche intermédiaire étant plus élevée que dans les couches de surface.
